# EUROPEAN PATENT APPLICATION

(11) **EP 1 221 431 A1**
(43) Date of publication of application: **10.07.2002**
(21) Application number: 02000163.2
(22) Date of filing: 08.01.2002
(51) Int. Cl.: C03C 8/16, C03C 17/02, H01J 11/02

(54) **Paste for forming ceramic ribs, production method for the same and forming method of ribs using the same**

(30) Priority: 09.01.2001 JP 2001001180; 14.09.2001 JP 2001280202
(71) Applicant: MITSUBISHI MATERIALS CORPORATION, Chiyoda-ku, Tokyo (JP)
(72) Inventor: Uesugi, Ryuji, Mitsubishi Materials Corporation, Naka-cho, Naka-gun, Ibaraki-ken (JP); Hashimoto, Ikiko, Mitsubishi Materials Corporation, Naka-cho, Naka-gun, Ibaraki-ken (JP); Kanda, Yoshio, Mitsubishi Materials Corporation, Naka-cho, Naka-gun, Ibaraki-ken (JP); Kuromitsu, Yoshirou, Mitsubishi Materials Corp., Naka-cho, Naka-gun, Ibaraki-ken (JP); Kang, Young Cheul, Chonan City, Chungchongnam-Do (KR); Chung, Seung Jae, Chonan City, Chungchongnam-Do (KR); Kim, Joon Mim, Chonan City, Chungchongnam-Do (KR); Yoshikawa, Kanzo, Chonan City, Chungchongnam-Do (KR)
(74) Representative: HOFFMANN - EITLE

(57) **Abstract**

One object of the present invention is to provide a paste that is easily coated, has a comparatively long aging time and is able to maintain the shape of the ribs following plastic deformation; in order to achieve the object, the present invention provides a paste comprising 50-95 % by weight of glass powder or glass-ceramic mixed powder, 0.1-15 % by weight of a resin, and 3-60 % by weight of a plurality of kinds of solvents, wherein each boiling point of the plurality of kinds of solvents differs by 30°C or more; and, the plurality of kinds of solvents contain one or more low boiling point solvents which are low boiling point solvents having a boiling point from 100°C to 180°C, and one or more high boiling point solvents which are high boiling point solvents having a boiling point from 190°C to 450°C.

## Description

### BACKGROUND OF THE INVENTION

### Field of the Invention

The present invention relates to a paste for forming ribs (ceramic capillary ribs) in the production process of FPD (flat panel displays) such as PDP (plasma display panels) and PALC (plastic addressed liquid crystal displays), production method for the paste, and forming method of the ribs using the paste, ceramic ribs made from the ribs, and an FPD having these ceramic ribs.

### Description of the Related Art

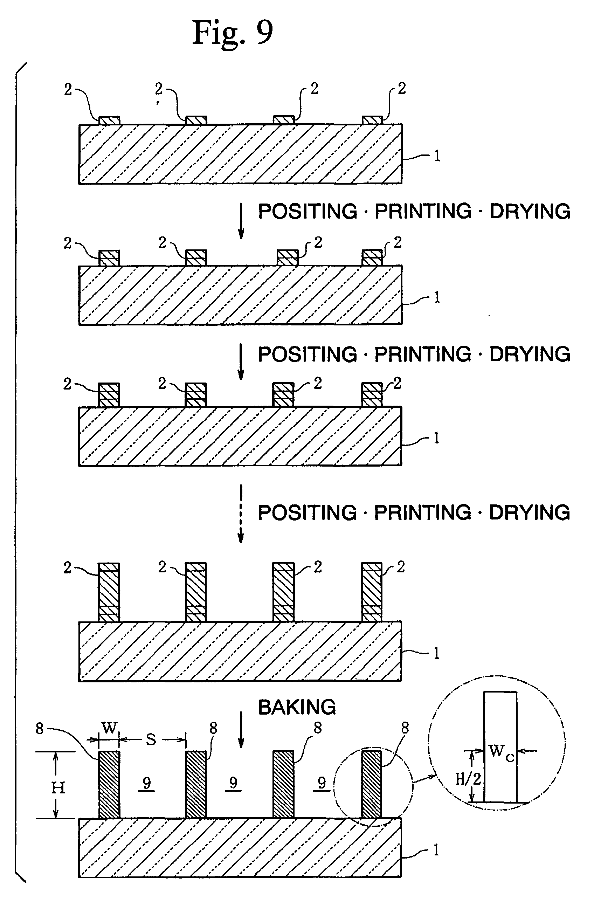

In the past, ceramic ribs were made by positioning a rib-forming paste 2 containing glass powder on a glass substrate 1 in a prescribed pattern by a thick film printing method, coating several layers of the paste and baking the paste after drying to form at prescribed intervals on substrate 1 as shown in FIG. 9. The height H of rib 8 is normally 100-300 µm, the width W is normally 50-100 µm, and the spread S of cell 9 between the ribs is about 100-300 µm.

However, in the method of forming ceramic ribs by thick film printing of the prior art as described above, since the width W of the ribs is comparatively narrow at 50-100 µm and the paste runs easily after printing, the thickness of a single coat of the thick film at completion of baking must be made to be small at 10-20 µm. As a result, in order to form ribs having a height H of 100-300 µm with this method, it is necessary to coat the paste as many as 10-20 times, and the value of H/W obtained by dividing rib height H following coating by rib width W becomes large at about 1.5-4. Consequently, this method had the shortcoming of it being difficult to accurately form ribs even if adequate positioning is performed at the time of thick film printing.

In order to overcome this shortcoming, a method was suggested in which a blade having prescribed comb teeth is penetrated into a paste film formed on a substrate surface, and the blade is moved in a fixed direction relative to the paste film to plasticly deform the paste film and form ribs on the substrate surface (Japanese Unexamined Patent Application, First Publication No. Hei 11-283497). Ribs formed with this method become ceramic ribs as a result of subsequent drying and baking, thereby making it possible to form ceramic ribs both easily and accurately, without waste and in fewer steps as compared with the thick film printing method of the prior art.

However, in the method for forming ribs described above, since a paste is initially coated onto the surface of a substrate to form a paste film; it is desirable that the paste used in this method have comparatively satisfactory fluidity, be easily coated onto the substrate surface, and be able to be coated to a uniform thickness. In addition, the paste is required to not undergo any changes in chemical or physical properties during the time until it is coated onto the substrate surface, namely it must have a comparatively long aging time. On the other hand, since ribs are formed on the substrate surface by plasticly deforming the paste film formed on the substrate surface, it is necessary to prevent sagging of the ribs formed by plastic deformation so that their shape is maintained until subsequent drying and baking. On the basis of these factors, the paste is also required to have comparatively low fluidity after plastic deformation.

### SUMMARY OF THE INVENTION

An object of the present invention is to provide a paste that is easily coated, has a comparatively long aging time and is able to maintain the shape of the ribs following plastic deformation, its production method, and a forming method of ribs in which they are used.

Another object of the present invention is to provide ceramic ribs made from these ribs, and an FPD having these ceramic ribs.

In order to achieve the object, the present invention provides a paste comprising 50-95 wt% of a glass powder or glass-ceramic mixed powder, 0.1-15 wt% of a resin, and 3-60 wt% of a plurality of kinds of solvents, wherein each boiling point of the plurality of kinds of solvents differs by 30°C or more; and the plurality of kinds of solvents contains one or more low boiling point solvents having a boiling point from 100°C to 180°C, and one or more high boiling point solvents having a boiling point from 190°C to 450°C.

According to the paste, the paste is comparatively fluid and of a prescribed viscosity that is easily coated, and can be easily spread to a uniform thickness on a substrate. On the other hand, the viscosity of the paste increases in the state in which one or more low boiling point solvents have been volatilized. Ribs obtained by plastic deformation of the paste film, in which the viscosity has increased, to a desired shape with a blade retain their shape even after being deformed, and ceramic ribs can be produced that retain their shape without any distortion of the shape of the ribs.

In the paste, it is preferable to additionally contain at least one of a plasticizer and a dispersant.

In the paste, as a result of blending the paste in the manner described above, a paste can be obtained that has a viscosity of 0.1-200 Pa·s at a shear rate of 20/second, and a paste having this viscosity is comparatively fluid and can be easily spread to a uniform thickness on a substrate.

Here, in order to make the aging time comparatively long, the low boiling point solvent is preferably selected from the group consisting of ethers, esters and hydrocarbons, and the high boiling point solvent is preferably ethers.

The weight ratio of the high boiling point solvent to the low boiling point solvent in this case in the form of low boiling point solvent: high boiling point solvent is preferably 50-5:50-95, and the ratio of low boiling point solvent: high boiling point solvent is most preferably 35:65. In addition, the viscosity at a shear rate of 20/second is preferably 0.2-100 Pa·s, and more preferably 0.5-80 Pa·s.

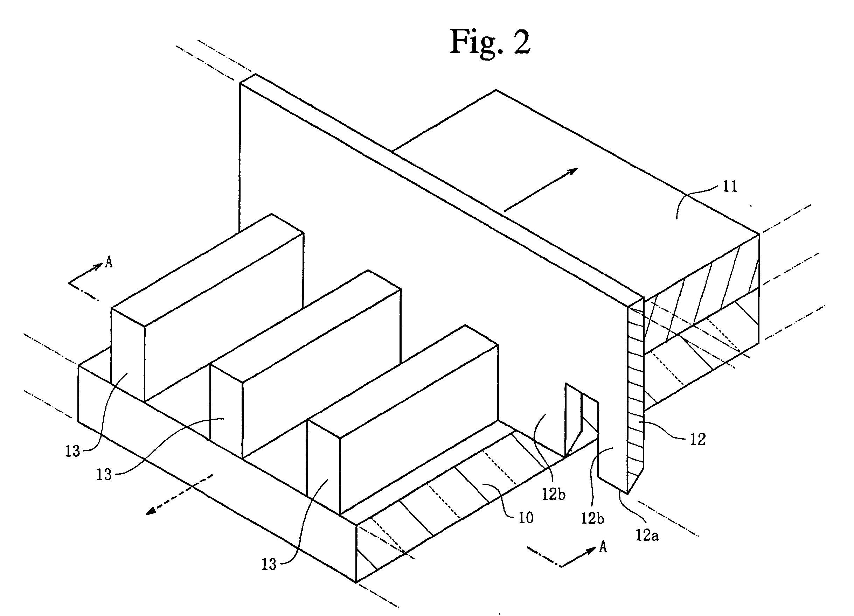

In addition, in this paste, the low boiling point solvent is in a volatile state, and the viscosity at a shear rate of 20/second is 50-1,000 Pa·s. When the low boiling point solvent is volatilized and a prescribed external force is applied to the paste having this viscosity, the paste is deformed to ribs having a desired shape as shown in FIG. 2, the paste does not return to its original shape even if the external force is removed, and the above ribs are maintained in the shape after deformation. Furthermore, the viscosity at a shear rate of 20/second of paste in which the low boiling point solvent is volatilized is preferably 60-800 Pa·s, and more preferably 70-500 Pa·s.

In order to achieve the object, the present invention provides a production method of a paste comprising:
a step in which a kneaded mixture is obtained by kneading glass powder or glass-ceramic mixed powder, a resin, and one or more high boiling point solvents having a boiling point from 190°C to 450°C; and
a step in which one or more low boiling point solvents having a boiling point from 100°C to 180°C are added to the kneaded mixture and again kneaded.

In the production method, it is preferable for the mixture prior to addition of the low boiling point solvent additionally to contain at least one of a plasticizer and a dispersant.

In the production method, since the high boiling point solvent is mixed and kneaded with both a powder and a resin, the high boiling point solvent mainly conforms to the glass powder or glass-ceramic powder mixture. Since the low boiling point solvent is subsequently added followed by re-kneading, the low boiling point solvent conforms around the high boiling point solvent that conforms around the powder. Consequently, a paste can be obtained in which the low boiling point solvent is comparatively volatile.

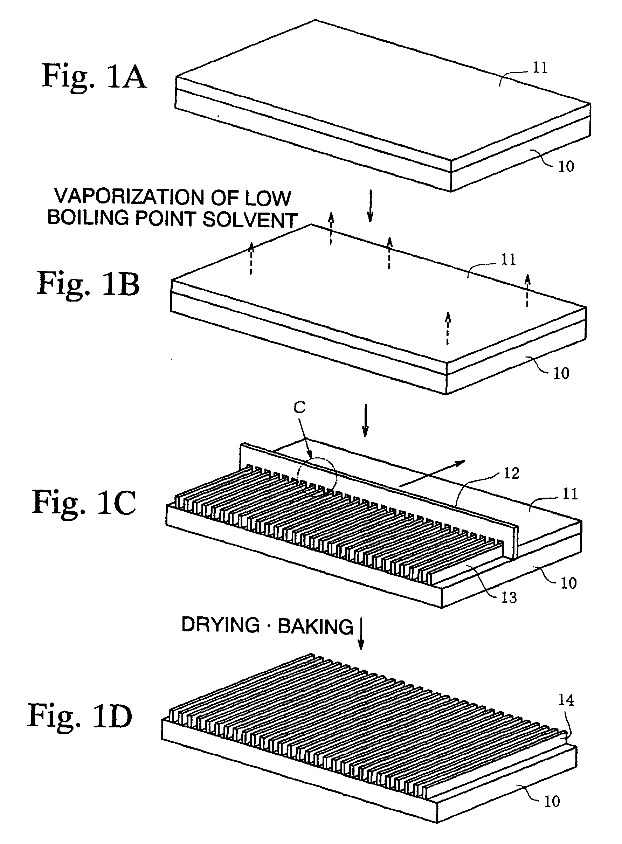

In order to achieve the object, the present invention provide a forming method of ribs, which is as shown in FIG. 1, comprising:
a step in which a paste film is formed by coating the above-mentioned paste onto the surface of a substrate;
a step in which one or more low boiling point solvents are vaporized from paste film formed on the substrate surface; and
a step in which a blade having prescribed comb teeth is penetrated into paste film from which the one or more low boiling point solvents have been vaporized, and the blade is moved in a fixed direction relative to the paste film to plasticly deform the paste film and form ribs in the surface of the substrate.

In the forming method, since a paste in which the low boiling point solvent is not volatilized and the viscosity of the paste is comparatively low is coated onto the surface of substrate, this coating is comparatively easy and the paste can be easily spread to a uniform thickness on the substrate.

On the other hand, paste film, in which the low boiling point solvents have been volatilized, has a comparatively high viscosity, and when blade is penetrated into paste film having this viscosity and a prescribed external force is applied to move blade in a fixed direction, that paste film is deformed to ribs of a desired shape, and the above ribs are maintained in the shape following deformation.

In addition, in order to achieve the object, the present invention provide a ceramic rib which is formed by comprising drying and baking the ribs formed with the forming method. The ceramic ribs have a high-definition.

Furthermore, in order to achieve the object, the present invention provide an FPD having the ceramic ribs.

Moreover, if the ribs of the present invention are dried and baked, and if those ceramic ribs are used in an FPD, a high-quality FPD can be obtained.

Furthermore, the term "paste" in the present specification includes that which contains the glass powder or glass-ceramic powder mixture, a resin and a solvent.

### BRIEF DESCRIPTION OF THE DRAWINGS

FIGS. 1A to 1D are perspective views showing the sequence for forming the ribs of the present invention.
FIG. 2 is enlarged perspective view of section C in FIG. 1.
FIGS. 3A to 3C are cross-sectional views of various modes of the substrate of the present invention.
FIG. 4 is a cross-sectional view showing ceramic ribs obtained by drying, heating and baking the ribs in the cross-section taken along lines A-A in FIG. 2.
FIG. 5 is a frontal view of the blade.
FIG. 6 is a cross-sectional view taken along lines B-B in FIG. 5.
FIG. 7 is a perspective view corresponding to FIG. 2 showing the formed state of ribs with an undercoating layer.
FIG. 8 is a cross-sectional view corresponding to FIG. 4 showing ceramic ribs with a dielectric layer obtained by drying, heating and baking the ribs with an undercoating layer in the cross-section taken along lines B-B in FIG. 7
FIG. 9 is a cross-sectional view showing the processing sequence of ceramic ribs of the prior art.

### DETAILED DESCRIPTION OF THE PREFERRED EMBODIMENTS

Next, an embodiment of the present invention will be explained referring to the figures.

As shown in FIG. 2, ribs 13 having a prescribed shape are formed in the surface of substrate 10 by coating a paste onto the surface of substrate 10, penetrating comb teeth 12b formed on blade 12 into the formed paste film 11, and moving blade 12 or substrate 10 in a fixed direction in the state in which edge 12a of blade 12 is in contact with the surface of substrate 10. The paste is a paste that contains glass powder or glass-ceramic powder mixture, a resin and a plurality of kinds of solvents, the glass powder has for its main component, for example, SiO₂, ZnO, PbO, B₂O₃, and the like, and its softening point is required to be 300-600°C.

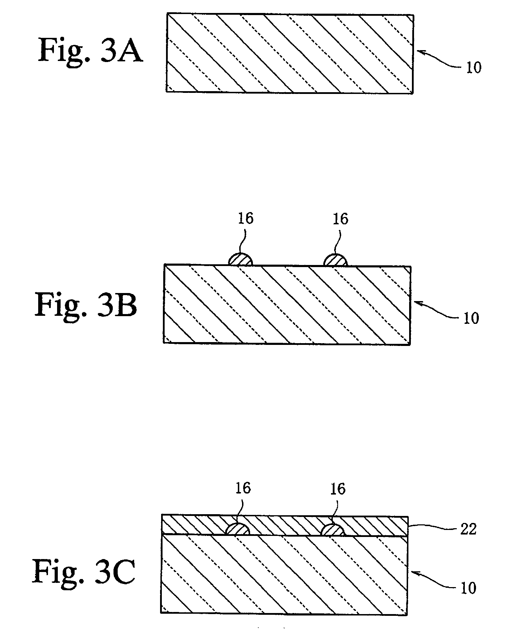

Examples of the substrate of the present invention include only glass substrate 10 shown in FIG. 3A, glass substrate 10 on which electrodes 16 are formed on the surface as shown in FIG. 3B, and glass substrate 10 in which undercoating layer 22, made of ceramic and so forth, is formed on the surface as shown in FIG. 3C.

In addition, the glass-ceramic mixed powder of the present invention contains glass powder having for its main component SiO₂, ZnO, PbO, B₂O₃ and the like, and a ceramic powder such as alumina, cordierite, mullite, forsterite, zircon or titania, that fulfills a filler. This ceramic powder is mixed in to equilibrate the coefficient of thermal expansion of ribs 13 and that of glass substrate 10, and to improve the strength of the ceramic ribs after baking. The amount of ceramic powder is preferably 60 vol% or less. If the amount of ceramic powder exceeds 60 vol%, the ribs become porous, thereby making this undesirable. Furthermore, the particle diameter of the glass powder and ceramic powder is preferably 0.1-30 µm each. If the particle diameter of the glass powder and ceramic powder is less than 0.1 µm, the powder aggregates easily and becomes bothersome to handle. In addition, if the particle diameter exceeds 30 µm, the desired ribs 13 cannot be formed during movement of blade 12 to be described later, thereby making this unsuitable.

The paste contains glass powder or glass-ceramic mixed powder of 50-95 wt%, a resin of 0.1-15 wt%, and a plurality of kinds of solvents of 3-60 wt%. In addition, the glass powder or glass-ceramic mixed powder is preferably contained at 60-90 wt%, the resin preferably at 0.5-3.5 wt%, and the solvent preferably at 7-40 wt%. The reason for limiting the glass powder or glass-ceramic powder mixture to the range of 50-95 wt% is that if it is present at less than 50 wt%, it becomes difficult to obtain ribs of a prescribed shape using a blade, while if present in excess of 95 wt%, it becomes difficult to uniformly coat the paste on the surface of the substrate. In addition, the reason for limiting the resin to the range of 0.1-15 wt% is that if it is present at less than 0.1 wt%, it becomes difficult to obtain ribs of prescribed shape using a blade, while if present in excess of 15 wt%, it becomes difficult to uniformly coat the paste on the surface of the substrate, and the problem results in which organic substances remain in the ceramic ribs after baking. Moreover, the reason for limiting the plurality of kinds of solvents to the range of 3-60 wt% is that if they are present at less than 3 wt%, it becomes difficult to uniformly coat the paste on the surface of the substrate, while if they are present in excess of 60 wt%, the amount of time for subsequently vaporizing the plurality of kinds of solvents becomes longer. As a result of blending the paste in the manner described above, the viscosity at a shear rate of 20/second becomes 0.1-200 Pa·s, and it is easy to coat and spread the paste to a uniform thickness on the surface of substrate 10.

The resin is a polymer that has the function of a binder, is easily decomposed by heat, dissolves in solvent and has a high viscosity, examples of which include ethyl cellulose, acrylic and polyvinylbutyral.

The plurality of kinds of solvents include one or more low boiling point solvents selected from the group consisting of low boiling point solvents having a boiling point from 100°C to 180°C, and one or more high boiling point solvents selected from the group consisting of high boiling point solvents having a boiling point from 190°C to 450°C. Examples of the low boiling point solvents having a boiling point from 100°C to 180°C are shown in Table 1, while examples of the high boiling point solvents having a boiling point from 190°C to 450°C are shown in Table 2. Solvents are selected so that boiling point of the low boiling point solvent selected and the high boiling point solvent selected differs by 30°C or more. In cases in which aging time is required to be comparatively long in particular, the low boiling point solvent is preferably selected from the group consisting of ethers, esters, and hydrocarbons, and the high boiling point solvent is preferably selected from ether. The weight ratio of the high boiling point solvent to the low boiling point solvent in this case in the form of low boiling point solvent: high boiling point solvent is preferably 50-5:50-95.

Although the paste comprises the above-mentioned powder, a resin and plurality of kinds of solvents, when necessary, these can be used as main components, and a plasticizer and a dispersant can be additionally contained. Examples of plasticizers include glycerin, adipate, phthalate, and phosphate, while examples of dispersants include alkylbenzenesulfonate, alkyltosomethylammonium salt, fatty acid polyvalent alcohol ester, phosphate, and the like.

**Table 1-1**

| Kind | Solvent | Boiling Point (BP) |
|---|---|---|
| Hydrocarbons | 1-octene | 121.3 |
| | 2,2,5-trimethylhexane | 124.1 |
| | octane | 125.7 |
| | ethylcyclohexane | 131.8 |
| | ethylbenzene | 136.2 |
| | p-xylene | 138.4 |
| | m-xylene | 139.1 |
| | o-xylene | 144.4 |
| | styrene | 145.1 |
| | 1-nonene | 146.9 |
| | nonane | 150.8 |
| | isopropylbenzene | 152.4 |
| | α-pinene | 156.0 |
| | turpentine | 164.0 |
| | 1,3,5-trimethylbenzene | 164.7 |
| | tert-butylbenzene | 169.1 |
| | p-mentane | 169.5 |
| | 1-decene | 170.5 |
| | n-decane | 174.1 |
| | p-cymene | 177.1 |
| | dipentene | 177.7 |
| | sec-butylbenzene | 178.3 |
| Halogenated | tetrachloroethylene | 121.2 |
| hydrocarbons | 1,1,1,2-tetrachloroethane | 129.2 |
| | 1,2-dibromoethane | 131.4 |
| | chlorobenzene | 131.7 |
| | 1,1,2,2-tetrachloroethane | 146.3 |
| | bromoform | 148.1 |
| | bromobenzene | 156.1 |
| | 1,2,3-trichloropropane | 156.9 |
| | o-trichlorobenzene | 159.3 |
| | p-trichlorobenzene | 162.0 |
| | pentachloroethane | 162.0 |
| | m-dichlorobenzene | 173.0 |
| Alcohols | 3-methyl-2-butanol | 112.0 |
| | neopentyl alcohol | 114.0 |
| | propargyl alcohol | 115.0 |
| | 3-pentanol | 115.6 |
| | 1-butanol | 117.7 |
| | 2-pentanol | 119.3 |
| | 2-methyl-1-butanol | 128.0 |
| | isopentyl alcohol | 130.8 |
| | 4-methyl-2-pentanol | 131.8 |

**Table 1-2**

| Kind | Solvent | Boiling Point (BP) |
|---|---|---|
| Alcohols | 1-pentanol | 138.0 |
| | 2-ethyl-1-butanol | 147.0 |
| | 2-methyl-1-pentanol | 148.0 |
| | 1-methylcyclohexanol | 155.2 |
| | 3-heptanol | 156.1 |
| | 1-hexanol | 157.1 |
| | 2-heptanol | 160.4 |
| | cyclohexanol | 161.0 |
| | cis-2-methylcyclohexanol | 165.0 |
| | abietinol | 165.0 |
| | trans-2-methylcyclohexanol | 165.5 |
| | cis-3-methylcyclohexanol | 173.0 |
| | trans-3-methylcyclohexanol | 174.5 |
| | 1-heptanol | 176.3 |
| | 2-octanol | 178.5 |
| Ethers | 1,2-diethoxyethane | 121.4 |
| | dibutylether | 142.4 |
| | anisole | 153.8 |
| | diethylene glycol dimethyl ether | 159.8 |
| | o-methoxytoluene | 171.8 |
| | phenetole | 172.0 |
| | cineole | 176.0 |
| | m-methoxytoluene | 176.5 |
| | p-methoxytoluene | 176.6 |
| Ketones | 4-heptanone | 114.1 |
| | methyl isobutyl ketone | 115.9 |
| | 2-hexanone | 127.2 |
| | mesityl oxide | 129.8 |
| | 2-heptanone | 150.5 |
| | cyclohexanone | 155.7 |
| | diisobutyl ketone | 168.1 |
| | methylcyclohexanone | 169.8 |
| Esters | isobutyl acetate | 118.0 |
| | ethyl butyrate | 121.3 |
| | butyl acetate | 126.1 |
| | diethyl carbonate | 126.8 |
| | pentyl formate | 130.4 |
| | ethyl isovalerate | 134.7 |
| | monobutyrine | 139.5 |
| | isopentyl acetate | 142.0 |
| | butyl propionate | 145.4 |
| | sec-hexyl acetate | 146.3 |
| | isobutyl isobutyrate | 147.5 |

**Table 1-3**

| Kind | Solvent | Boiling Point (BP) |
|---|---|---|
| Esters | ethyl 2-hydroxy-2-methylpropionate | 148.3 |
| | pentyl acetate | 149.6 |
| | tributyl phosphate | 154.0 |
| | isopentyl propionate | 160.3 |
| | 2-ethylbutyl acetate | 162.4 |
| | butyl butyrate | 166.4 |
| | 3-methoxybutyl acetate | 173.0 |
| | diacetine | 173.0 |
| | cyclohexyl acetate | 174.0 |
| Nitrogen compounds | Dicyclohexylamine | 113.5 |
| | Nitroethane | 114.0 |
| | Pyridine | 115.4 |
| | Ethylenediamine | 117.3 |
| | Butyronitrile | 117.9 |
| | Propylenediamine | 119.3 |
| | 2-nitropropane | 120.3 |
| | a-picoline | 129.4 |
| | Pyrrole | 130.0 |
| | 1-nitropropane | 131.4 |
| | Cyclohexylamine | 134.5 |
| | Diisobutylamine | 138.0 |
| | Valeronitrile | 141.3 |
| | β-picoline | 144.0 |
| | 2,5-lutidine | 144.0 |
| | γ-picoline | 145.3 |
| | N-methylpropionamide | 148.0 |
| | N,N-dimethylformamide | 153.0 |
| | 2,4-lutidine | 157.5 |
| | Dibutylamine | 159.6 |
| | N,N-dimethylacetoamide | 166.1 |
| | 2-ethylhexylamine | 169.2 |
| | methyl carbamate | 177.0 |
| | N,N-diethylformamide | 177.5 |
| | N,N,N',N'-tetramethylurea | 177.5 |
| | ε-caprolactam | 180.0 |
| Sulfur compounds | tetrahydrothiophen | 120.9 |
| | 1,3-propanesultone | 156.0 |
| Compounds having two or more functional groups | 1-methoxy-2-propanol | 120.0 |
| | 2-methoxyethanol | 124.6 |
| | 1-chloro-2-propanol | 127.4 |
| | 2-chloroethanol | 128.6 |
| | morpholine | 128.9 |
| | 1-ethoxy-2-propanol | 132.2 |

**Table 1-4**

| Kind | Solvent | Boiling Point (BP) |
|---|---|---|
| Compounds having two or more functional groups | 2-(dimethylamino)ethanol | |
| | 2-ethoxyethanol | 134.6 |
| | N-methylmorpholine | 135.6 |
| | 2-isopropoxyethanol | 138.0 |
| | 2-methoxyethyl acetate | 141.0 |
| | methyl lactate | 144.5 |
| | ethyl lactate | 144.8 |
| | 2-ethoxyethyl acetate | 154.5 |
| | furfural | 156.3 |
| | 2-(diethylamino)ethanol | 161.8 |
| | 2-(methoxymethoxy)ethanol | 162.1 |
| | diacetone alcohol | 167.5 |
| | furfuryl alcohol | 168.1 |
| | 2-butoxyethanol | 170.0 |
| | 2-aminoethanol | 170.2 |
| | methyl acetoacetate | 171.0 |
| | 1,3-chloro-2-propanol | 171.7 |
| | tetrahydrofurfuryl alcohol | 174.3 |
| | bis(2-chloroethyl)ether | 178.0 |
| | | 178.8 |
| Inorganic solvents | water | 100.0 |

**Table 2-1**

| Kind | Solvent | Boiling Point (BP) |
|---|---|---|
| Hydrocarbons | pentylbenzene | 205.4 |
| | tetralin | 207.7 |
| | n-dodecane | 216.3 |
| | trans-transbicyclohexyl | 218.0 |
| | cis-cisbicyclohexyl | 235.5 |
| | cyclohexylbenzene | 240.1 |
| | dipentylbenzene | 288.0 |
| | dodecylbenzene | 331.0 |
| Halogenated hydrocarbons | 1,2,4-trichlorobenzene | 210.0 |
| | o-dibromobenzene | 223.5 |
| | 1,1,2,2-tetrabromoethane | 243.5 |
| Alcohols | benzyl alcohol | 205.5 |
| | 1,3-butanediol | 207.5 |
| | 1,3-propanediol | 212.0 |
| | 1-nonanol | 214.0 |
| | α-turpentineol | 219.0 |
| | 1,4-butanediol | 229.2 |
| | 1-decanol | 231.0 |
| | cis-2-butene-1,4-diol | 235.0 |
| | trans-2-butene-1,4-diol | 236.5 |
| | 1,5-pentanediol | 242.4 |
| | 1-undecanol | 243.0 |
| | 2-ethyl-1,3-hexanediol | 243.2 |
| | 1-dodecanol | 259.0 |
| | glycerin | 290.0 |
| Ethers | 1,2-dibutoxyethane | 203.3 |
| | peratrole | 206.7 |
| | butyl phenyl ether | 211.8 |
| | n-pentyl phenyl ether | 214.0 |
| | I-pentyl phenyl ether | 224.0 |
| | dihexyl ether | 226.2 |
| | diethylene glycol dibutyl ether | 254.6 |
| | diphenyl ether | 258.3 |
| | dibenzyl ether | 296.5 |
| Ketones | acetophenone | 202.0 |
| | isophorone | 215.2 |
| Esters | dimethyl maleate | 200.4 |
| | γ-butyllactone | 204.0 |
| | ethyl abietate | 205.0 |
| | bis(2-ethylhexyl)adipate | 213.0 |
| | ethyl benzoate | 213.2 |
| | benzyl acetate | 213.5 |
| | triethyl phosphate | 215.5 |

**Table 2-2**

| Esters | diethyl maleate | 225.3 |
|---|---|---|
| | propyl benzoate | 231.2 |
| | tributyl borate | 233.5 |
| | ethylene carbonate | 238.0 |
| | propylene carbonate | 242.0 |
| | triphenyl phosphate | 245.0 |
| | dibutyl oxalate | 245.5 |
| | butyl benzoate | 250.3 |
| | tri-p-cresyl phosphate | 260.0 |
| | isopentyl benzoate | 262.0 |
| | ethyl cinnamate | 271.0 |
| | tripentyl borate | 275.3 |
| | tri-m-cresyl phosphate | 278.0 |
| | dibutyl maleate | 280.0 |
| | methyl phthalate | 282.0 |
| | octyl phthalate | 284.0 |
| | benzyl abietate | 295.0 |
| | ethyl phthalate | 295.0 |
| | dibutyl phthalate | 339.0 |
| | dibutyl benzoate | 324.0 |
| | dibutyl tartrate | 312.0 |
| | bis(2-ethylhexyl)sebacate | 345.0 |
| | pentyl stearate | 360.0 |
| | 2-ethylhexyl phthalate | 386.0 |
| | tri-o-cresyl phosphate | 410.0 |
| | diisodecyl phthalate | 420.0 |
| Nitrogen compounds | p-toluidine | 200.4 |
| | o-toluidine | 200.7 |
| | N-methylpyrrolidone | 202.0 |
| | m-toluidine | 203.5 |
| | N-methylacetoamide | 206.0 |
| | diethylenetriamine | 207.1 |
| | formamide | 210.5 |
| | nitrobenzene | 210.9 |
| | N,N-diethylaniline | 217.0 |
| | acetoamide | 221.2 |
| | α-tolnitrile | 233.5 |
| | quinoline | 237.6 |
| | isoquinoline | 243.2 |
| | 2-pyrrolidine | 245.0 |
| | succinonitrile | 267.0 |
| | tetraethylenepentamine | 333.0 |
| Sulfur compounds | Sulforan | 287.3 |

**Table 2-3**

| Kind | Solvent | Boiling Point (BP) |
|---|---|---|
| Compounds having two or more functional groups | dipropylene glycol monomethyl ether | 190.0 |
| | 2-butoxyethylacetate | 191.5 |
| | diethylene glycol monomethyl ether | 194.1 |
| | dichloroacetate | 194.4 |
| | trichloroacetate | 197.5 |
| | dipropylene glycol monoethyl ether | 197.8 |
| | diethylene glycol monoethyl ether | 202.0 |
| | methyl cyanoacetate | 205.1 |
| | ethyl cyanoacetate | 206.0 |
| | 2-(hexyloxy)ethanol | 208.7 |
| | o-chloroaniline | 208.8 |
| | 3-chloro-1,2-propanediol | 213.0 |
| | diethylene glycol monoethyl ether acetate | 217.4 |
| | 3-hydroxypropiononitrile | 220.0 |
| | methyl salicylate | 223.3 |
| | diethylene glycol monobutyl ether | 230.0 |
| | dipropylene glycol | 231.8 |
| | hexamethylphosphate triamide | 233.0 |
| | tripropylene glycol monomethyl ether | 243.0 |
| | 2-phenoxyethanol | 244.7 |
| | diethylene glycol | 244.8 |
| | diethylene glycol monobutyl ether acetate | 246.8 |
| | triethylene glycol monomethyl ether | 249.0 |
| | 2-(benzyloxy)ethanol | 256.0 |
| | 2-phenoxyethylacetate | 259.7 |
| | N-phenylmorpholine | 268.0 |
| | diethanolamine | 268.4 |
| | N-butylethanolamine | 274.0 |
| | o-nitroanisole | 277.0 |
| | 2,2'-thiodiethanol | 282.0 |
| | triethylene glycol | 298.0 |
| | isopropanolamine | 305.4 |
| | tetraethylene glycol | 327.3 |
| | triethanolamine | 335.4 |

In the paste production method, one or more low boiling point solvents in Table 1 are selected, one or more high boiling point solvents are selected, for which the boiling point with the low boiling point solvent is different by 30°C or more in Table 2, and both solvents are weighed. Separately weighed glass powder or glass-ceramic mixed powder, the resin and the high boiling point solvent are then formulated and kneaded. In the case of containing the plasticizer or dispersant, using the high boiling point solvent as the main component, one or both of the plasticizer or dispersant is mixed into the high boiling point solvent in advance, after which the above-mentioned powder and the resin are formulated and additionally kneaded into this mixture. Subsequently, the low boiling point solvent is added and kneaded again to obtain a paste.

Below, the method of forming ribs using the paste obtained in this manner will be explained referring to FIG. 1.

As shown in FIG. 1A, the above paste is first coated onto a substrate surface to form paste film 11. Coating of the paste onto the surface of substrate 10 is performed may a known means such as a coating method using a roll coater or table coater, a screen printing method, a dipping method or a doctor blade method. After the paste has been coated onto the surface of substrate 10 and paste film 11 has been formed, as shown in FIG. 1B, that substrate 10 is allowed to stand for a prescribed amount of time and one or more low boiling point solvents are vaporized from paste film 11 formed on the substrate surface as indicated with the broken line arrows. Although the environmental temperature and time for vaporizing the one or more low boiling point solvents differ according to the type of solvent used for the low boiling point solvent, in the case of using a low boiling point solvent such as 1-ethoxy-2-propanol or 4-methyl-2-pentanol having a boiling point in the vicinity of 120-150°C, the substrate is preferably allowed to stand in an atmosphere at 15-25°C for 1-5 hours.

In the paste of this mode for carrying out the invention in particular, since the ribs are produced by adding one or more low boiling points solvents in the final step, only the one or more high boiling point solvents mixed initially conform around the powder in the glass powder or glass-ceramic mixed powder, and since the low boiling point solvent conforms around the high boiling point solvent that has conformed around the powder, a paste results in which the low boiling point solvent are volatilized comparatively easily, and by allowing substrate 10 to stand for a prescribed amount of time, the low boiling point solvent can be reliably vaporized from paste film 11.

After completely vaporizing the low boiling point solvent, as shown in FIG. 1C, by penetrating plate 12 into paste film 11 and moving in a fixed direction, the paste film 11 is plasticly deformed by blade 12 to form ribs 13.

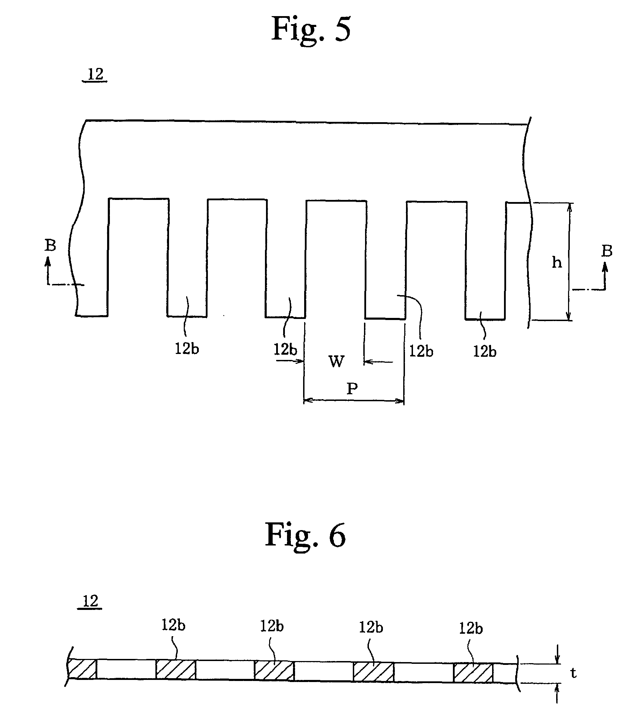

Here, as shown in FIGS. 5 and 6, a plurality of comb teeth 12b are formed at equal intervals and in the same direction in blade 12 that is penetrated into paste film 11. This blade 12 is made from metal, ceramic, or plastic and so forth that does not react with the paste and is not dissolved in the paste, and from the viewpoints of dimensional accuracy and durability in particular, ceramic or an alloy containing Fe, Ni, and Co is preferable. Each comb tooth 12b is formed so that the gap between them corresponds to the cross-sectional shape of ribs 13 formed by blade 12.

In addition, the shape of the gaps of comb teeth 12b is not only the case of forming a rectangular shape as shown in FIG. 5, but rather the shape of the gaps of comb teeth 12b may form a trapezoidal shape or inverted trapezoidal shape according to the application of the FPD ultimately produced. If the shape of the gaps of comb teeth 12b is made to be trapezoidal, ribs 13 can be formed that are suited for applications having wide openings, while if the shape of the gaps of comb teeth 12b is made to be inverted trapezoidal, ribs 13 can be formed in which the apices of the ribs have a wide area and are flat.

As shown in FIG. 2, the formation of ribs 13 by blade 12 composed in this manner is carried out by penetrating comb teeth 12b of blade 12 into paste film 11, and either moving blade 12 in a fixed direction as indicated with the solid line arrows of FIG. 2 while fixing substrate 10 in the state in which edge 12a is contacted with the surface of substrate 10, or moving substrate 10 in a fixed direction as indicated with the broken line arrows of FIG. 2 while fixing blade 12, to plasticly deform paste film 11. Namely, due to the above movement, the locations corresponding to comb teeth 12b of plate 12 of the paste coated onto the surface of substrate 10 are those locations that move to or are scratched off by the gaps of comb teeth 12b, and only the paste located in the gaps of comb teeth 12b remains on substrate 10 to form ribs 13 on the surface of substrate 10. In the case the depth of the grooves of the comb teeth is greater than the thickness of paste film 11, paste that is scratched off when blade 12 or glass substrate 10 is moved enters the grooves, allowing the formation of ribs 13 having a height equal to or greater than the thickness of paste film 11.

If the paste film in which the low boiling point solvent has been volatilized has a viscosity of 50-1,000 Pa·s at a shear rate of 20/second, and that paste film 11 is plasticly deformed by penetrating comb teeth 12b of blade 12 and moving in a fixed direction relative to paste film 11, the paste is deformed to ribs of a desired shape, the ribs 13 are held in the shape following deformation without returning to its original shape even after the above external force is removed, and ribs 13 of a desired shape corresponding to the shape of the gaps of comb teeth 12 are formed on the surface of substrate 10.

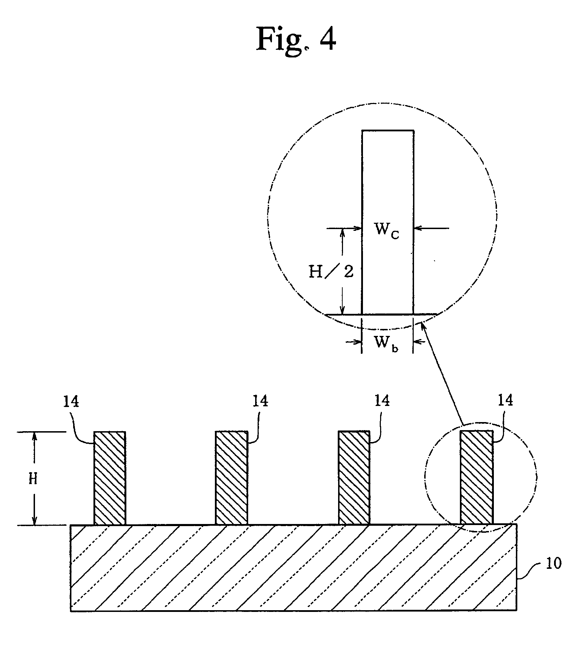

After having formed these ribs 13, they are dried for 15-30 minutes in air at 150-200°C, and by subsequently baking for 10-30 minutes in air at 520-580°C, ceramic ribs 14 result as shown in FIG. 4 that do not lose their shape. In the present invention, one or more high boiling point solvents, and one or more low boiling point solvents for which the boiling differs from that of the high boiling point solvent by 30°C or more, are contained in the paste, and since only one or more low boiling point solvents are volatilized prior to formation of ribs 13, in comparison with the case of containing only one kind of solvent, there is no occurrence of uneven volatilization of solvents in paste film 11, the shape of ribs 13 formed by plasticly deforming the paste film 11 by blade 12 is favorably maintained, and ceramic ribs 14 having a uniform shape are obtained over the entire glass substrate 10.

These ceramic ribs can then be used to produce an FPD such as a PDP or PALC not shown.

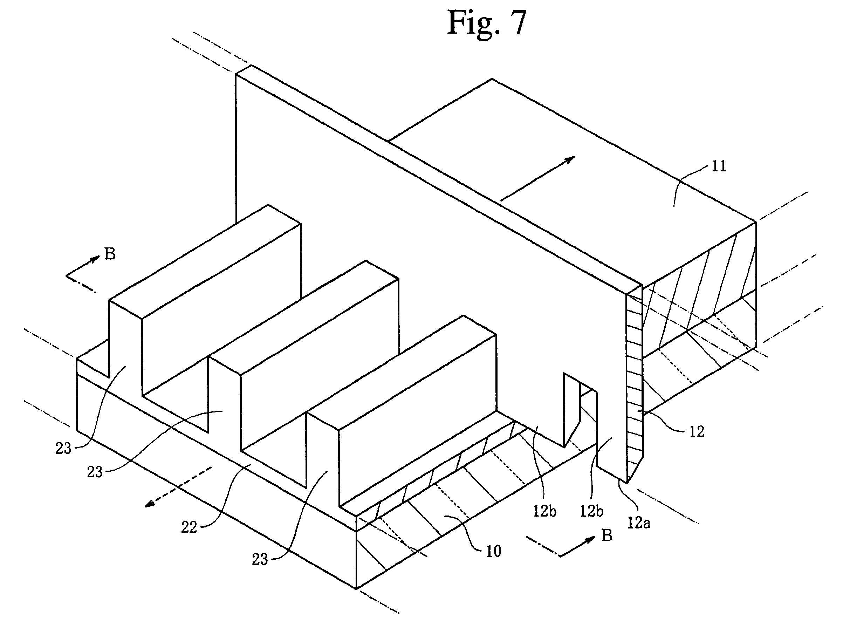

Furthermore, in the above mode for carrying out the invention, although ribs 13 were formed directly in the surface of the substrate either by moving blade 12 or substrate 10 in the state in which comb teeth 12b of blade 12 penetrate paste film 11 and edge 12a is contacted with the surface of substrate 10, as shown in FIG. 7, paste film 11 may also be plasticly deformed by penetrating comb teeth 12b of blade 12 into paste film 11 formed on the surface of substrate 10 and moving blade 12 or substrate 10 in a fixed direction in the state in which edge 12a of blade 12 is lifted from the surface of substrate 10 at a prescribed height. When plasticly deformed in this manner, undercoating layer 22 and ribs 23 on this undercoating layer can be formed on the surface of substrate 10.

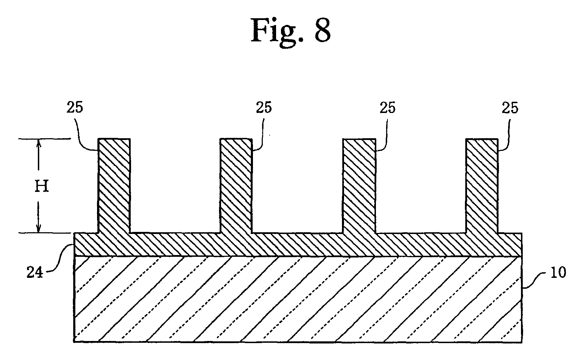

Namely, paste up to a prescribed height from the surface of substrate 10 remains on the surface of the substrate and undercoating layer 22 is formed by the movement of blade 12 of substrate 10, and the locations corresponding to comb teeth 12b of blade 12 in the paste above this undercoating layer 22 either move to or are scratched off by the gaps of comb teeth 12b, and only the paste located in the gaps of comb teeth 12b remains on undercoating layer 22, while ribs 23 are formed on undercoating layer 22. Next, when the above undercoating layer 22 and ribs 23 are dried and baked, as shown in FIG. 8, dielectric layer 24 is formed on substrate 10, and ceramic ribs 25 are formed on this dielectric layer 24.

### Example

Below, the present invention will be explained in detail referring to Examples and Comparative Examples.

### Example 1

80 wt% of PbO-SiO₂-B₂O₃-based glass powder having an average particle diameter of 1 µm, and 20 wt% of aluminum powder having an average particle diameter of 0.5 µm as a ceramic filler were mixed well. This mixed powder, ethyl cellulose as a resin, α-turpentineol as the high boiling point solvent and 1-ethyoxy-2-propanol as the low boiling point solvent were weighed out to a weight ratio of 80/1/14/7. This weighed mixed powder, the resin and the high boiling point solvent were first blended and kneaded well to obtain a mixture. The weighed low boiling point solvent, 1-ethoxy-2-propanol, was then added to this mixture and kneaded to obtain a paste.

Next, with a soda lime-based, rectangular glass substrate 10 having a diagonal size of 42 inches and thickness of about 3 mm in a fixed state, the above paste was coated on this glass substrate 10 at a thickness of 150 µm using a table coater as shown in FIG. 2 to form a paste film 11. By then allowing substrate 10 on which was formed paste film 11 in this manner to stand for 1 hour at room temperature, the low boiling point solvent of 1-ethoxy-2-propanol was vaporized from paste film 11.

On the other hand, a blade 12 formed from stainless steel having a thickness of 0.1 mm was prepared in which the pitch P of comb teeth 12b was 360 µm, the gap w of comb teeth 12b was 180 µm, and the depth h was 300 µm (FIGS. 5 and 6). Comb teeth 12b of this blade 12 were then penetrated into the paste film from which the low boiling point solvent had been vaporized, and blade 12 was moved in a fixed direction as indicated with the solid line arrow of FIG. 2 in the state in which edge 12a was in contact with glass substrate 10 to plasticly deform paste film 11 and form ribs 13 on the surface of substrate 10.

Subsequently, ribs 13 were dried for 20 minutes in air at 150°C to eliminate the high boiling point solvent, and then baked for 10 minutes in air at 550°C to form ceramic ribs 14.

### Comparative Example 1

The same mixed powder as Example 1, ethyl cellulose as the resin, and α-turpentineol as solvent were kneaded at a ratio of 85/1/14 and mixed well to obtain a paste. The paste containing a single solvent in this manner was then coated at a thickness of 150 µm by screen printing onto the same glass substrate as Example 1 to form paste film 11. Subsequently, using the same blade 12 as Example 1, ceramic ribs 14 were obtained using the same procedure as Example 1.

### Comparative Example 2

The same mixed powder as Example 1, ethyl cellulose as the resin, α-turpentineol as the high boiling point solvent and 1-ethoxy-2-propanol as the low boiling point solvent were blended at a weight ratio of 80/1/14/7 and kneaded well to obtain a paste. Ceramic ribs were obtained using the same procedure as Example 1 with the exception of obtaining the paste by simultaneously kneading the high boiling point solvent and the low boiling point solvent in this manner.

### Comparative Example 3

The paste of Example 1 was coated at a thickness of 150 µm onto the same glass substrate 10 as Example 1 using a table coater to form paste film 11, and comb teeth 12b of blade 12 were penetrated into the paste film without vaporizing the low boiling point solvent of 1-ethoxy-2-propanol to form ribs 13 on the surface of substrate 10 by moving blade 12 in a fixed direction. Subsequently, these ribs 13 were dried and baked under the same conditions as Example 1 to obtain ceramic ribs.

### Test 1 and Evaluation thereof

The height H and width were measured for 100 randomly selected ceramic ribs 14 obtained in Example 1 and Comparative Examples 1 through 3. As shown in FIG. 4, the width of the ceramic ribs was measured by measuring rib width Wc at height (1/2) H when the height of the ceramic ribs is taken to be H.

In addition, after calculating the averages of these measured values, the respective dispersion of H and Wc were calculated in terms of the (maximum value or minimum value - average value)/average value. Those results are shown in Table 5.

**Table 5**

| | Example 1 | Comparative Example 1 | Comparative Example 2 | Comparative Example |
|---|---|---|---|---|
| H (100 pcs.) (µm) | 127-131 | 126-133 | 97-151 | Immeasurable |
| Wc (100 pcs.) (µm) | 80-82 | 78-81 | 67-104 | Immeasurable |
| H (average) (µm) | 129.43 | 130.52 | 123.72 | Immeasurable |
| Wc (average) (µm) | 81.02 | 79.63 | 85.61 | Immeasurable |
| H dispersion (%) | +0.6/-0.9 | +1.0/-1.6 | +12.3/-13.1 | Immeasurable |
| Wc dispersion (%) | +1.3/-1.2 | +2.0/-1.9 | +14.7/-15.5 | Immeasurable |

As is clear from Table 5, the H dispersion and the Wc dispersion of the ceramic ribs of Example 1 can be seen to be significantly smaller than that of Comparative Examples 1 through 3. The reason for the small dispersion in the ceramic ribs of Example 1 is due to the ribs being formed after volatilizing the low boiling point solvent, thereby making the viscosity of the paste comparatively high and reducing sagging of the ribs.

On the other hand, the reason for the large dispersion in the ceramic ribs of Comparative Example 1 is due to only a single solvent having a comparatively high boiling point being contained in the paste, thereby making the viscosity of the paste comparatively high such that when that paste is coated onto the substrate and spread to a uniform thickness, unevenness occurs in its thickness. In addition, the reason for the large dispersion in the ceramic ribs of Comparative Example 2 is due to the low boiling point solvent having conformed around the powder in the glass powder or glass-ceramic mixed powder together with the high boiling point solvent since the high boiling point solvent and the low boiling point solvent were mixed simultaneously, thereby causing unevenness to occur in volatilization of the low boiling point solvent when substrate 10 on which paste film 11 was formed was allowed to stand for 1 hour at room temperature, and the resulting unevenness in viscosity of the paste film throughout the substrate causing sagging of the formed ribs to occur non-uniformly. Moreover, the reason for the ceramic ribs in Comparative Example 3 being unable to be measured is that, since the low boiling point solvent was not vaporized, the viscosity of the paste was extremely low, thereby preventing the formation of ribs.

Next, a detailed explanation is provided of embodiments and comparative examples with respect to aging time.

### Example 2

80 wt% of PbO-SiO₂-B₂O₃-based glass powder having an average particle diameter of 1 µm, and 20 wt% of aluminum powder having an average particle diameter of 0.5 µm as a ceramic filler were prepared and mixed well. This mixed powder, ethyl cellulose as the resin, diethylene glycol dibutyl ether as the ether high boiling point solvent and nonane as the hydrocarbon low boiling point solvent were weighed out to a weight ratio of 80/1/14/7. This weighed mixed powder, the resin and the high boiling point solvent were first blended and kneaded well to obtain a mixture. The weighed low boiling point solvent, nonane, was then added to this mixture and kneaded to obtain a paste.

### Example 3

A paste was obtained in which ethylcyclohexane was added as the low boiling point solvent using the same procedure as Example 2 with the exception of using hydrocarbon solvent, ethylcyclohexane, as the low boiling point solvent.

### Example 4

A paste was obtained in which xylene was added as the low boiling point solvent using the same procedure as Example 2 with the exception of using the hydrocarbon solvent, xylene, as the low boiling point solvent.

### Example 5

A paste was obtained in which dibutyl ether was added as the low boiling point solvent using the same procedure as Example 2 with the exception of using the ether solvent, dibutyl ether, as the low boiling point solvent.

### Example 6

A paste was obtained in which diethylene glycol dimethyl ether was added as the low boiling point solvent using the same procedure as Example 2 with the exception of using the ether solvent, diethylene glycol dimethyl ether, as the low boiling point solvent.

### Example 7

A paste was obtained in which anisole was added as the low boiling point solvent using the same procedure as Example 2 with the exception of using the ether solvent, anisole, as the low boiling point solvent.

### Example 8

A paste was obtained in which diethyl carbonate was added as the low boiling point solvent using the same procedure as Example 2 with the exception of using the ester solvent, diethyl carbonate, as the low boiling point solvent.

### Example 9

A paste was obtained in which isopentyl acetate was added as the low boiling point solvent using the same procedure as Example 2 with the exception of using the ester solvent, isopentyl acetate, as the low boiling point solvent.

### Comparative Example 4

A paste was obtained in which 1-butanol was added as low boiling point solvent using the same procedure as Example 2 with the exception of using the alcohol-based solvent, 1-butanol, as the low boiling point solvent. This paste was designated as Comparative Example 4.

### Comparative Example 5

A paste was obtained in which 4-methyl-2-pentanol was added as the low boiling point solvent using the same procedure as Example 2 with the exception of using the alcohol solvent, 4-methyl-2-pentanol, as the low boiling point solvent.

### Comparative Example 6

A paste was obtained in which 1-ethoxy-2-propanol was added as the low boiling point solvent using the same procedure as Example 2 with the exception of using the alcohol-ether solvent, 1-ethoxy-2-propanol, as the low boiling point solvent.

### Test 2 and Evaluation thereof

Each of the pastes in Examples 2 through 9 and Comparative Examples 4 through 6 were divided into two portions, and one of the divided portions of each paste was immediately coated at a thickness of 150 µm by screen printing onto the same glass substrate as Example 1 to form paste film 11. Subsequently, ceramic ribs 14 were obtained using the same blade 12 as Example 1 according to the same procedure as Example 1.

In addition, the other divided portions of each paste were respectively placed in separate sealed containers and stored for 120 hours in an atmosphere at 30°C. After 120 hours elapsed, each of the paste portions were removed from their sealed containers and coated at a thickness of 150 µm by screen printing onto the same glass substrate as Example 1 to form paste film 11. Subsequently, ceramic ribs 14 were obtained using the same blade 12 as Example 1 according to the same procedure as Example 1.

After measuring the height H and width Wb of the bottoms of ribs 14 shown in FIG. 4 for 100 randomly selected ceramic ribs 14 obtained from the pastes in Examples 2 through 9 and Comparative Examples 4 through 6 in this manner, and calculating their average values, the ratio (H/Wb) was determined for each average value. The rate of change of (B/A) was then determined using ratio A for the ceramic ribs obtained by immediately coating and forming the resulting pastes, and ratio B for the ceramic ribs obtained by coating and forming the paste after storing for 120 hours. Those results along with the respective high boiling point solvent and low boiling point solvent systems are shown in Table 6.

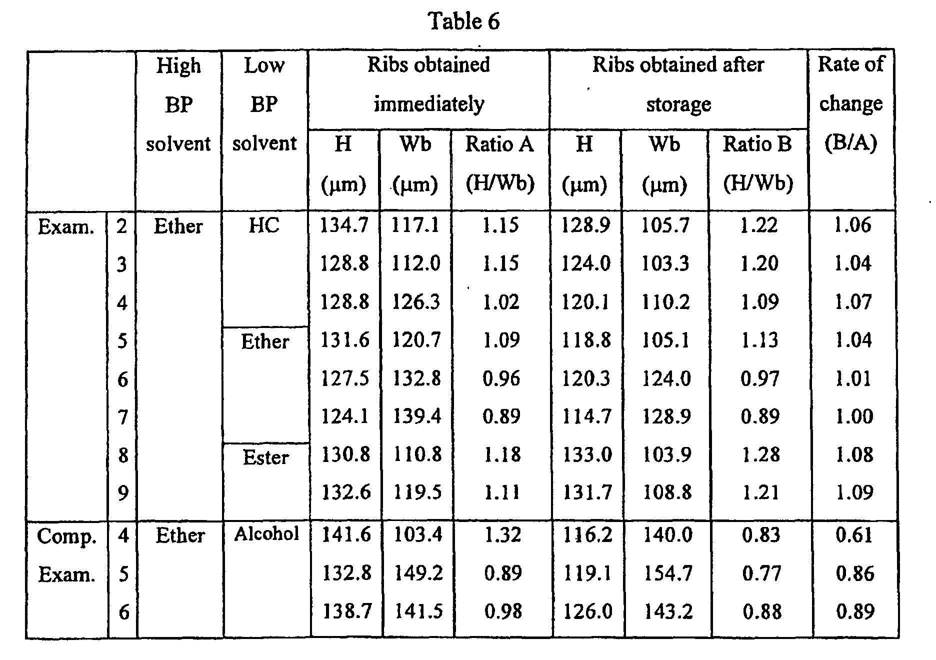

As is clear from Table 6, the rate of change in Examples 2 through 9 can be seen to be extremely small in comparison with Comparative Examples 4 through 6. This is thought to be due to the ether, ester, and hydrocarbon solvents not causing deterioration of the resin in the paste. Thus, the aging time of the paste in which one or more low boiling point solvents are selected from the group consisting of ether solvent, ester solvent, and hydrocarbon solvent, and one or more high boiling point solvents are ether solvent was determined to be comparatively longer as compared with paste employing other combinations.

## Claims

1. A paste comprising 50-95 % by weight of glass powder or glass-ceramic mixed powder, 0.1-15 % by weight of a resin, and 3-60 % by weight of a plurality of kinds of solvents, wherein
each boiling point of the plurality of kinds of solvents differs by 30°C or more; and,
the plurality of kinds of solvents contain one or more low boiling point solvents which are low boiling point solvents having a boiling point from 100°C to 180°C, and one or more high boiling point solvents which are high boiling point solvents having a boiling point from 190°C to 450°C.

2. A paste according to claim 1, wherein it additionally contains at least one of a plasticizer and a dispersant.

3. A paste according to claim 1, wherein said one or more low boiling point solvents are selected from the group consisting of ether solvent, ester solvent, and hydrocarbon solvents; and said one or more high boiling point solvents are ether solvents.

4. A paste according to claim 2, wherein said one or more low boiling point solvents are selected from the group consisting of ether solvent, ester solvent, and hydrocarbon solvents; and said one or more high boiling point solvents are ether solvents.

5. A paste according to claim 3, wherein the weight ratio of said one or more high boiling point solvents to said one or more low boiling point solvents in the form of low boiling point solvent: high boiling point solvent is 50-5:50-95.

6. A paste according to claim 4, wherein the weight ratio of said one or more high boiling point solvents to said one or more low boiling point solvents in the form of low boiling point solvent: high boiling point solvent is 50-5:50-95.

7. A production method of a paste comprising:
a step in which a kneaded mixture is obtained by kneading glass powder or glass-ceramic mixed powder, a resin, and one or more high boiling point solvents having a boiling point from 190°C to 450°C, and
a step in which one or more low boiling point solvents having a boiling point from 100°C to 180°C are added to said kneaded mixture and again kneaded.

8. A production method of a paste according to claim 7, wherein said kneaded mixture prior to addition of said low boiling point solvent additionally contains at least one of a plasticizer and a dispersant.

9. A forming method of ribs comprising:
a step in which a paste film (11) is formed by coating said paste according to claim 1 onto a surface of a substrate (10);
a step in which said one or more low boiling point solvents are vaporized from said paste film (11) formed on said surface of said substrate (10); and
a step in which a blade (12) having prescribed comb teeth (12b) is penetrated into said paste film (11) from which said one or more low boiling point solvents have been vaporized, and said blade (12) is moved in a fixed direction relative to said paste film (11) to plasticly deform said paste film and form ribs (13) in said surface of said substrate (10).

10. A forming method of ribs comprising:
a step in which a paste film (11) is formed by coating said paste obtained by said production method according to claim 5 onto a surface of a substrate (10);
a step in which said one or more low boiling point solvents are vaporized from said paste film (11) formed on said surface of said substrate (10); and
a step in which a blade (12) having prescribed comb teeth (12b) is penetrated into said paste film (11) from which said one or more low boiling point solvents have been vaporized, and said blade (12) is moved in a fixed direction relative to said paste film (11) to plasticly deform said paste film and form ribs (13) in said surface of said substrate (10).

11. A ceramic rib obtainable by drying and baking said ribs (13) formed with said forming method according to claim 9.

12. A ceramic rib obtainable by drying and baking said ribs (13) formed with said forming method according to claim 10.

13. An FPD comprising said ceramic ribs according to claim 11.

14. An FPD comprising said ceramic ribs according to claim 12.
